# EUROPÄISCHE PATENTSCHRIFT

(11) **EP 0 706 039 B1**
(45) Veröffentlichungstag und Bekanntmachung des Hinweises auf die Patenterteilung: **10.06.1998**
(21) Anmeldenummer: 94810574.7
(22) Anmeldetag: 03.10.1994
(51) Int. Cl.: G01M 15/00

(54) **Vorrichtung zum Abtasten eines Elementes und Kolbenbrennkraftmaschine mit einer solchen Vorrichtung**
Device for sensing an element and a piston combustion machine with such a device
Dispositif pour palper un élément et machine à combustion à piston avec un tel dispositif

(43) Veröffentlichungstag der Anmeldung: 10.04.1996
(73) Patentinhaber: Wärtsilä NSD Schweiz AG, 8401 Winterthur (CH)
(72) Erfinder: Häussler, Alex, CH-8047 Zürich (CH); Weder, Marcel, CH-8583 Sulgen (CH)
(74) Vertreter: Heubeck, Bernhard

(56) Entgegenhaltungen:
- PATENT ABSTRACTS OF JAPAN vol. 15, no. 308 (E-1097) 7. August 1991 & JP-A-03 109 816 (SUNX LTD.) 9. Mai 1991
- PATENT ABSTRACTS OF JAPAN vol. 18, no. 356 (P-1765) 5. Juli 1994 & JP-A-06 094 684 (SUMITOMO METAL IND LTD) 8. April 1994
- PATENT ABSTRACTS OF JAPAN vol. 15, no. 491 (M-1190) 12. Dezember 1991 & JP-A-03 213 641 (ISUZU CERAMICS KENKYUSHO : KK) 19. September 1991

## Beschreibung

Die Erfindung betrifft eine Vorrichtung zum Abtasten eines Elementes gemäss dem Oberbegriff des Anspruches 1 sowie eine Kolbenbrennkraftmaschine mit im Kolben montierten Kolbenringen, die mit dem Element versehen sind und mit einer derartigen Vorrichtung.

Es ist bekannt bei Grossdieselmotoren mit Hilfe eines durch einen Annäherungsfühlers erzeugten Signals Angaben über den Zustand der Kolbenringe zu erhalten. Hierzu weisen die Kolbenringe eine Einlage aus nicht magnetisierbarem Material auf und in der Zylinderbüchse ist eine Abtasteinrichtung vorgesehen. Diese Abtasteinrichtung enthält einen Magnetkern mit einer Wicklung, die in einem Gehäuse angeordnet sind. Der Magnetkern ist im Gehäuse so angeordnet, dass dessen Polflächen freiliegen, und mit der Einlage eine direkte Wirkverbindung besteht. Die Wicklungsenden sind aus dem Gehäuse herausgeführt und über eine Steckereinrichtung mit einer Auswerteinrichtung verbunden. Diese Abtasteinrichtung erweist sich als störanfällig, weil die durch die Magnetfeldänderung bewirkte Spannungsänderungen über verschmutzungsempfindliche, elektrische Steckerelemente an die Auswerteinrichtung weitergeleitet werden.

Hier will die Erfindung Abhilfe schaffen. Die Erfindung wie sie in den Ansprüchen gekennzeichnet ist löst die Aufgabe durch Verlagerung der Schnittstelle in den magnetischen Kreis eine verschmutzungssichere Energieübertragung zu erzielen und dadurch eine sichere Signalübertragung zu erreichen.

Durch die Ausbildung der Trennstelle mit Vor- und Rücksprung kann eine formschlüssige Verbindung an der Schnittstelle erzielt werden. Ein als Schnittbandkern ausgebildeter Magnetkreis hat den Vorteil, dass eine hochfrequente Spannung angelegt werden kann und folglich eine bessere Signalübertragung erzielt wird.

Bei einer Kolbenbrennkraftmaschine ist der magnetische Kreis lagestabil an der Maschine angeordnet und der elektrische Kreis mit dem magnetischen Kreis lösbar verbunden.

Hierzu erweist sich als vorteilhaft, dass sich keine verschmutzungempfindlichen elektrischen Kontakte in unmittelbarer Nähe der Maschine befinden und der elektrische Kreis thermisch abgeschirmt ist.

Die Ausführungsform des magnetischen Kreises hat den Vorteil, dass der von den Polflächen bestimmte Abtastbereich minimal ist und daher eine Anpassung der Polflächen an den Kolbenringdurchmesser nicht erforderlich ist.

Im folgenden wird die Erfindung anhand der beiliegenden Zeichnungen erläutert:

Es zeigen:
- Fig. 1 und 2: eine schematische Darstellung einer Ausführungsform einer erfindungsgemässen Vorrichtung im Auf- und Seitenriss und
- Fig. 3: eine perspektivische Ansicht einer Ausführungsform der Vorrichtung in auseinandergezogener Darstellung.

Die Figuren zeigen eine bevorzugte Ausführungsform der Vorrichtung, die bei einer Kolbenbrennkraftmaschine angewendet wird, um die Abnutzung der Kolbenringe zu überwachen.

Die Vorrichtung enthält einen im wesentlichen U-förmigen Magnetkern 1, der einen magnetischen Kreis bildet, eine Wicklung 2, die den elektrischen Kreis bildet und ein Gehäuse aus zwei, eine Schnittstelle 3 bestimmenden Teilen 4, 5.

Die Schnittstelle 3 ist im magnetischen Kreis 1 vorgesehen, d.h. verläuft durch die Schenkel 6, 7 des Magnetkernes 1. Durch diese Trennung wird die Vorrichtung in einen Adapter 4, der ortsfest montiert werden kann und in einen Anschlussteil 5 unterteilt, der mit dem Adapter 4 verbindbar ist.

Die Gehäuseteile 4, 5 bestehen aus Grauguss und weisen Ausnehmungen (nicht dargestellt) auf, in welche die Schenkel 6, 7 lagestabil angeordnet und durch geeignete Verbindungsmittel z.B. Klebstoff befestigt sind. Im diesem Zusammenhang wird darauf hingewiesen, dass anstelle von Grauguss andere Materialien verwendet werden können, soweit diese nicht magnetisierbar sind.

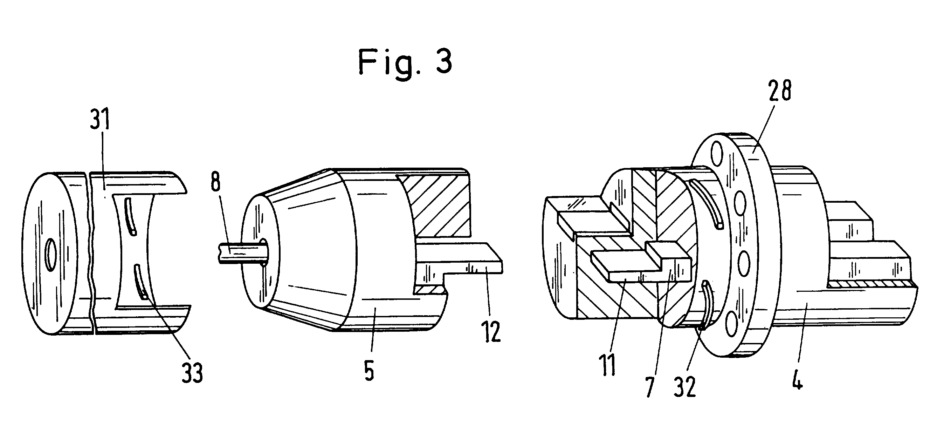

Die mechanische Schnittstelle 3 ist als Vor- und Rücksprung mit freiliegenden Kontaktabschnitten 11, 12 an den Schenkeln 6, 7 ausgebildet (Fig. 3).

Der Magnetkern 1 ist ein sogenannter Schnittbandkern, der aus geschichten Bändern besteht und mit einer Isolationschicht aus Phosphat versehen ist. Die Enden der Wicklung 2 sind mit einer Leitung 8 verbunden, die aus dem Anschlussteil 5 herausgeführt ist und am Ende Steckelemente 9 aufweist, um die Vorrichtung mit einer Auswerteinrichtung zu verbinden.

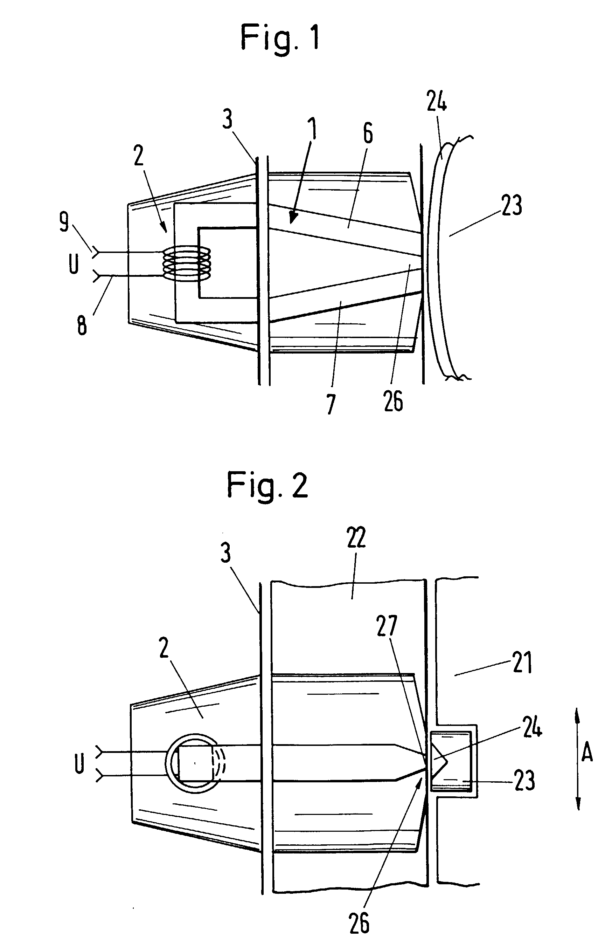

Wie bereits erwähnt wird die Vorrichtung bevorzugt bei Dieselmotoren zur Ueberwachung der Kolbenringabnutzung angewendet. Bei diesen Motoren führt ein Kolben 21 in einer Zylinderbüchse 22 eine translatorische Bewegung (Pfeil A) aus. Im Kolben 21 ist ein Kolbenring 23 in an sich bekannter Weise montiert, der mit einer Einlage 24 aus Spritzmetall insbesondere aus einer CU AL-Legierung versehen ist (Fig.2).

Wie aus Fig. 1 und 2 ersichtlich, sind die Schenkel 6, 7 konvergierend ausgebildet und weisen einen zu ihren freien Ende hin verjüngten Abschnitt 26 auf, um den Abtastbereich möglichst klein zugestalten.

Der Adapter 4 ist in die Zylinderbüchse 21 eingesetzt und so befestigt, dass die Polenden 27 lagestabil angeordnet sind. Hierzu ist der Adapter 4 mit einem Flansch 28 versehen (Fig. 3).

Wie Fig. 3 ferner zeigt, ist eine Kappe 31 vorgesehen, um den Anschlussteil 5 am Adapter 4 zu halten. Am Adapter 4 und an der Kappe 31 sind Stege 32, 33 vorgesehen, die miteinander in Eingriff bringbar sind, um die Kappe 31 am Adapter festzuklemmen.

Die Vorrichtung umfasst einen magnetischen Kreis 1 und einen eletrischen Kreis 2, um ein bewegtes Element 24 abzutasten. Um eine verschmutzungssichere Energieübertragung zu gewährleisten, ist eine Schnittstelle 3 im magnetischen Kreis vorgesehen.

Bei einer Brennkolbenkraftmaschine wird der magnetische Kreis lagestabil an der Maschine befestigt und der elektrische Kreis ist an den magnetischen Kreis anschliessbar. Damit wird eine sichere Betriebsweise der Vorrichtung zur Ueberwachung der Kolbenringabnutzung gewährleistet.

## Patentansprüche

1. Vorrichtung zum elektromagnetischen Abtasten des Übergangs von magnetisierbarem und nicht magnetisierbarem Material eines bewegten Elements, welche Vorrichtung einen magnetischen Kreis, der mit dem Element in Wirkverbindung bringbar ist, einen elektrischen Kreis, der mit einer Einrichtung signalübertragend verbunden ist und ein Gehäuse mit zwei eine Schnittstelle bestimmenden Teilen aufweist dadurch gekennzeichnet, dass die Schnittstelle (3) im magnetischen Kreis vorgesehen ist, um eine verschmutzungssichere Energieübertragung zu gewährleisten.

2. Vorrichtung nach Anspruch 1 dadurch gekennzeichnet, dass die Schnittstelle (3) als Vor- und Rücksprung ausgebildet ist.

3. Vorrichtung nach Anspruch 1, dadurch gekennzeichnet, dass die Schnittstelle (3) kraft- und formschlüssig verbindbar ist.

4. Vorrichtung nach Anspruch 1, dadurch gekennzeichnet, dass der magnetische Kreis aus einem im wesentlichen U-förmigen Magnetkern besteht.

5. Vorrichtung nach Anspruch 4, dadurch gekennzeichnet, dass die Schnittstelle im Bereich der Schenkel oder im Uebergangsbereich zwischen Joch und Schenkel vorgesehen ist.

6. Vorrichtung nach einem der Ansprüche 4 oder 5, dadurch gekennzeichnet, dass das Joch hufeisenförmig ausgebildet ist.

7. Vorrichtung nach einem der Ansprüche 2 bis 5, dadurch gekennzeichnet, dass die Schenkel (6,7) konvergierend ausgebildet sind.

8. Vorrichtung nach einem der Ansprüche 2 bis 6, dadurch gekennzeichnet, dass der Magnetkern (1) ein Schichtbandkern ist.

9. Vorrichtung nach einem der Ansprüche 1 bis 7, dadurch gekennzeichnet, dass ein Anschlussteil (5), der die Bauelemente des elektrischen Kreises (2) enthält, ein Adapter (4), der Bauelemente des magnetischen Kreises (6,7) enthält, die lösbar miteinander verbunden sind und eine Einrichtung (31), um den Adapter und den Anschlussteil mechanisch zu verbinden vorgesehen sind.

10. Kolbenbrennkraftmaschine mit im Kolben montierten Kolbenringen, die mit dem abzutastenden Element versehen sind und mit einer Vorrichtung nach einem der Ansprüche 1 bis 9, dadurch gekennzeichnet, dass die Polenden (27) des magnetischen Kreises (1) lagestabil angeordnet sind und mit dem Element (24) in Wirkverbindung bringbar ist und dass der elektrische Kreis (2) lösbar mit dem magnetischen Kreis verbunden ist.

## Claims

1. Apparatus for the electrical sensing of the transition of magnetisable and non magnetisable material of a moved element, said apparatus comprising a magnetic circuit which can be brought into operational communication with the element, an electrical circuit which is connected in a signal transmitting manner to a device, and a housing with two parts which determine an interface,
characterised in that the interface (3) is provided in the magnetic circuit in order to ensure an energy transmission which is proof against contamination.

2. Apparatus in accordance with claim 1, characterised in that the interface (3) is designed as a projection and a recess.

3. Apparatus in accordance with claim 1, characterised in that the interface (3) can be connected in a force transmitting and form fitted manner.

4. Apparatus in accordance with claim 1, characterised in that the magnetic circuit consists of a substantially U-shaped magnetic core.

5. Apparatus in accordance with claim 4, characterised in that the interface is provided in the region of the limbs or in the transition region between the yoke and the limbs.

6. Apparatus in accordance with claim 4 or claim 5, characterised in that the yoke is designed in the shape of a horseshoe.

7. Apparatus in accordance with one of the claims 2 to 5, characterised in that the limbs (6, 7) are designed to be convergent.

8. Apparatus in accordance with one of the claims 2 to 6, characterised in that the magnetic core (1) is a magnetic tape core.

9. Apparatus in accordance with one of the claims 1 to 7, characterised in that a connection part (5) which contains the components of the electrical circuit (2), an adapter (4) which contains components of the magnetic circuit (6, 7) which are releasably connected to one another, and a device (31) in order to mechanically connect the adapter and the connection part are provided.

10. Reciprocating piston combustion engine with piston rings which are mounted in the piston, which are provided with thew element to be sensed and which comprise an apparatus in accordance with one of the claims 1 to 9, characterised in that the pole ends (27) of the magnetic core (1) are arranged in a stable position and can be brought into operational communication with the element (24); and in that the electrical circuit (2) is releasably connected to the magnetic circuit.

## Revendications

1. Dispositif pour l'exploration électromagnétique de la transition d'un matériau magnétisable et non magnétisable d'un élément mobile, ce dispositif comportant un cercle magnétique qui peut être mis en liaison active avec l'élément, un cercle électrique qui est relié à un dispositif de manière à transmettre les signaux et un boîtier avec deux parties définissant une interface, caractérisé en ce que l'interface (3) est prévue dans le cercle magnétique pour assurer une transmission d'énergie exempte d'encrassement.

2. Dispositif selon la revendication 1, caractérisé en ce que l'interface (3) est réalisée comme avancée et retour.

3. Dispositif selon la revendication 1, caractérisé en ce que l'interface (3) peut être reliée par force et par concordance des formes.

4. Dispositif selon la revendication 1, caractérisé en ce que le cercle magnétique est constitué d'un noyau magnétique essentiellement en forme de U.

5. Dispositif selon la revendication 4, caractérisé en ce que l'interface est prévue au voisinage des branches ou dans la zone de transition entre l'étrier et les branches.

6. Dispositif selon l'une des revendications 4 ou 5, caractérisé en ce que l'étrier est réalisé en forme de fer à cheval.

7. Dispositif selon l'une des revendications 2 à 5, caractérisé en ce que les branches (6,7) sont réalisées de manière converegente.

8. Dispositif selon l'une des revendications 2 à 6, caractérisé en ce que le noyau magnétique (1) est un tore enroulé fendu.

9. Dispositif selon l'une des revendications 1 à 7, caractérisé en ce que sont prévues une pièce de raccordement (5) qui contient les éléments du cercle électrique (2), un adaptateur (4) qui contient les éléments du cercle magnétique (6, 7) qui sont reliés amoviblement les uns aux autres et un dispositif (31) pour relier mécaniquement l'adaptateur et la pièce de raccordement.

10. Machine à combustion à piston avec des segments de piston montés dans le piston qui sont pourvus de l'élément à palper et avec un dispositif selon l'une des revendications 1 à 9, caractérisée en ce que les extrémités de pôle (27) du cercle magnétique (1) sont disposées dans une position stable et peuvent être amenées en liaison active avec l'élément (24) et en ce que le cercle électrique (2) est relié amoviblement au cercle magnétique.
